# EUROPEAN PATENT APPLICATION

(11) **EP 1 053 813 A2**
(43) Date of publication of application: **22.11.2000**
(21) Application number: 99118003.5
(22) Date of filing: 20.09.1999
(51) Int. Cl.: B23D 51/10

(54) **Saw blade attachment structure**

(30) Priority: 20.05.1999 JP 13944099
(71) Applicant: Takagi Co., Ltd., Sanjo-shi (JP)
(72) Inventor: Hideo Takahashi, Ichikawa-shi (JP)
(74) Representative: Kitzhofer, Thomas, Dipl.-Ing.

(57) **Abstract**

There is disclosed an epoch-making blade plate attachment structure of extremely-excellent utility in which a retaining mechanism can be switched between a locked condition and a free condition by effecting a simple operation, that is, by angularly moving a retaining pin portion, and this blade plate attachment structure is simple in construction, and is excellent in mass productivity, and the shaking of a blade plate in a locked condition is prevented. The blade plate 3 is slidingly inserted into an insertion cavity 2, formed in a handle 1, and is retained and fixed to the handle. A retaining pin portion 5 for engagement in a guide groove 4, formed through the blade plate 3, is mounted in the insertion cavity 2 for angular movement between a free position and a locked position. A retaining hole 6, having a diameter larger than a width of the guide groove 4, is formed at an inner end of the guide groove 4. The retaining pin portion 5 is formed into such a configuration that a width of the retaining pin portion varies depending on an angular position thereof, so that the retaining pin portion, when disposed in the free position, is able to slide along the guide groove 4 whereas the retaining pin portion, when angularly moved into the locked position, is unable to slide along the guide groove 4. When the retaining pin portion 5 is held in the free position, the blade plate 3 is inserted into the insertion cavity 2 until the retaining pin portion reaches the retaining hole 6, and then the retaining pin portion is angularly moved into the locked position, so that the retaining pin portion is unable to slide along the guide groove 4, thereby fixing the blade plate 3 to the handle 1 against withdrawal. A fix-free switching operation portion 7, which is operable to angularly move the retaining pin portion 5 between the free position and the locked position, is mounted on the handle 1.

## Description

### BACKGROUND OF THE INVENTION

### Field of the Invention

This invention relates to a blade plate attachment structure used, for example, in a handsaw of the blade exchangeable-type

### Related Art

There is known a blade plate attachment structure in which a blade plate, serving as an exchangeable blade, is slidingly inserted into an insertion cavity or gap, which is formed within a handle (formed by a pair of upper and lower casing members mated together), and extends from a front end of this handle toward the inside thereof, and this blade plate is fixedly retained by a retaining mechanism provided within the handle. The retaining mechanism is switched from a locked condition to a free condition by manipulating an operating portion mounted on the handle, and then the blade plate is withdrawn from the handle, and is replaced by a new or a different one. Such blade plate attachment structure has been extensively used in blade exchangeable-type handsaws and so on.

Although such blade plate attachment structures of various constructions have heretofore been proposed, most of them are complicated in construction, and besides are not entirely satisfactory in operability.

### SUMMARY OF THE INVENTION

It is therefore an object of this invention to provide an epoch-making blade plate attachment structure in which a retaining mechanism can be switched between a locked condition and a free condition by effecting a simple operation, that is, by angularly moving a retaining pin portion, and this blade plate attachment structure is simple in construction, and is excellent in mass productivity.

Another object of the invention is to provide an epoch-making blade plate attachment structure of extremely-excellent utility in which the switching operation can be easily effected with a simple construction, and besides the shaking of a blade plate in a locked condition is prevented.

According to a first aspect of the present invention, there is provided a blade plate attachment structure wherein a blade plate is slidingly inserted into an insertion cavity, formed in a handle, and is retained and fixed to the handle;
wherein a guide groove is formed through the blade plate, and extends from an insertion-side end thereof, defining a proximal end, toward a distal end thereof;
wherein a retaining pin portion for engagement in the guide groove is mounted in the insertion cavity for angular movement between a free position and a locked position;
wherein a retaining hole, having a diameter larger than a width of the guide groove, is formed at an inner end of the guide groove;
wherein the retaining pin portion is formed into such a configuration that a width of the retaining pin portion varies depending on an angular position thereof, so that the retaining pin portion, when disposed in the free position, is able to slide along the guide groove whereas the retaining pin portion, when angularly moved into the locked position, is unable to slide along the guide groove;
wherein when the retaining pin portion is held in the free position, the blade plate is inserted into the insertion cavity until the retaining pin portion reaches the retaining hole, and then the retaining pin portion is angularly moved into the locked position, so that the retaining pin portion is unable to slide along the guide groove, thereby fixing the blade plate to the handle against withdrawal; and
wherein a fix-free switching operation portion, which is operable to angularly move the retaining pin portion between the free position and the locked position, is mounted on the handle.

In the blade plate attachment structure according to a second aspect of the invention, the retaining pin portion is formed into a configuration substantially conforming to the shape of the retaining hole formed in an enlarged manner at the inner end of the guide groove, and the retaining pin portion has a smaller-width portion slightly smaller in width than the guide groove, and when the retaining pin portion is angularly moved into the free position, the smaller-width portion is aligned with the guide groove so as to allow the retaining pin portion to be engaged in the retaining hole, and when the retaining pin portion is angularly moved into the free position, the blade plate can be withdrawn from the insertion cavity in the handle since the width of the smaller-width portion is smaller than the width of the guide groove.

In the blade plate attachment structure according to a third aspect of the invention, the fix-free switching operation portion is formed on an upper end of the retaining pin portion, and is exposed to an outer surface of the handle.

In the blade plate attachment structure according to a fourth aspect of the invention, the retaining pin portion has a tapering outer surface portion which is formed on its outer peripheral surface, and is flaring in one of upper and lower directions corresponding to a direction of a thickness of the blade plate, and there is provided a resilient member which urges the retaining pin portion in the other of the upper and lower directions so that the tapering outer surface portion can be abutted against an inner edge of the retaining hole.

In the blade plate attachment structure of a fifth aspect of the invention, there is provided angular movement pressing portion, and when the retaining pin portion is angularly moved into the free position where the retaining pin portion can slide along the guide groove, the angular movement pressing portion presses and moves the retaining pin portion against the bias of the resilient member, thereby holding the tapering outer surface portion out of engagement with the inner edge of the retaining hole and inner edges of the guide groove.

In the blade plate attachment structure of the above construction according to the present invention, as the blade plate is slidingly inserted into the insertion cavity in the handle, the retaining pin portion, provided in the handle, slides along the guide groove, formed in the blade plate, toward the inner end of this guide groove, and when the blade plate is fully inserted into the insertion cavity, the retaining pin portion is engaged in the retaining hole formed at the inner end of the guide groove.

In this condition, the retaining pin portion is angularly moved into the locked position, the retaining pin portion is unable to slide along the guide groove, thereby fixing the blade plate to the handle against withdrawal.

Namely, when the fix-free switching operation portion is operated to angularly move the retaining pin portion from the free position (where the smaller-width portion of the retaining pin portion is aligned with the guide groove) into the locked position, the smaller-width portion is disposed out of alignment with the guide groove, so that the retaining pin portion can not slide along the guide groove. Therefore, the retaining pin portion is locked in engaged relation to the retaining hole, so that the blade plate can not be withdrawn from the insertion cavity in the handle.

For exchanging the blade plate, the fix-free switching operation portion is operated to angularly move the retaining pin portion into the free position, so that the smaller-width portion of the retaining pin portion is brought into alignment with the guide groove, and then the blade plate is withdrawn in such a manner that the retaining pin portion slides along the guide groove.

The retaining pin portion has the tapering outer surface portion which is formed on its outer peripheral surface, and is flaring in one of upper and lower directions (for example, lower direction) corresponding to the direction of the thickness of the blade plate, and the retaining pin portion is urged in the other (upper direction) by the resilient member so that the tapering outer surface portion can be abutted against the inner edge of the retaining hole. With this construction, in the locked condition, the tapering outer surface portion is held against the inner edge of the retaining hole under the influence of the resilient member, and therefore the shaking of the blade plate is prevented.

Thus, there is provided the epoch-making blade plate attachment structure of extremely-excellent utility in which the lock-free switching operation can be carried out easily with the simple construction, and besides the shaking of the blade plate is prevented.

For exchanging the blade plate, the retaining pin portion is angularly moved into the free position where the smaller-width portion of the retaining pin portion is aligned with the guide groove, and at this time the tapering outer surface portion is automatically brought out of engagement with the inner edge of the retaining hole and the inner edges of the guide groove by the angular movement pressing portion. With this construction, the blade plate can be smoothly withdrawn from the handle.

Namely, when the retaining pin portion is angularly moved into the free position, the retaining pin portion is automatically moved in the one direction (downward) against the bias of the resilient member by the angular movement pressing portion, so that the tapering outer surface portion is held out of engagement with the inner edge of the retaining hole and the inner edges of the guide groove. In this condition, the smaller-width portion of the retaining pin portion is aligned with the guide groove, and therefore the blade plate can be easily withdrawn from the handle.

### BRIEF DESCRIPTION OF THE DRAWINGS

Fig. 1 is a plan view of a handsaw incorporating one preferred embodiment of a blade plate attachment structure of the present invention;

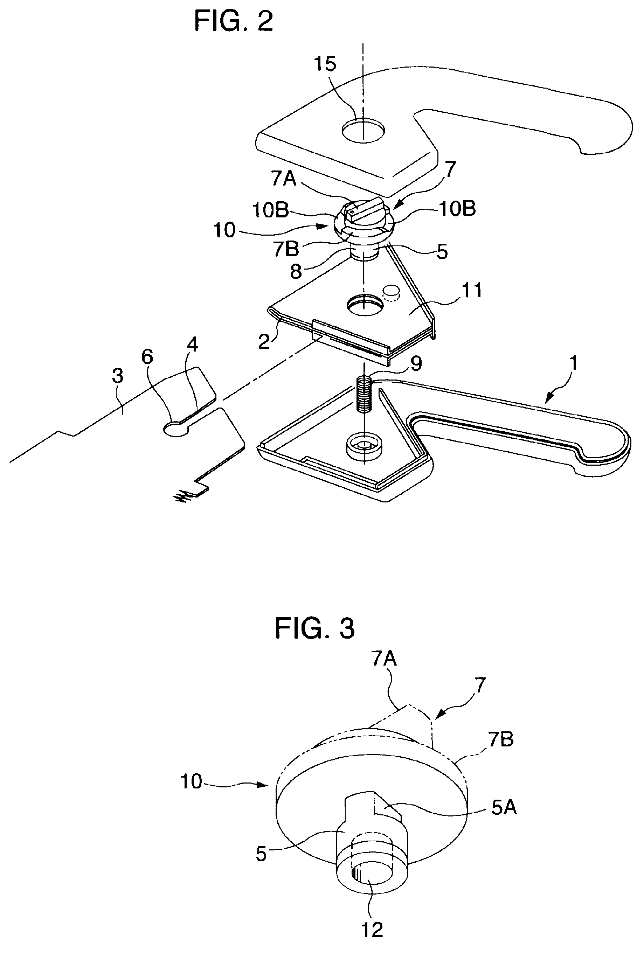

Fig. 2 is an exploded, perspective view of the handsaw of Fig. 1;
Fig. 3 is a perspective view of a retaining pin portion of the handsaw of Fig. 1 as seen from a lower side thereof;

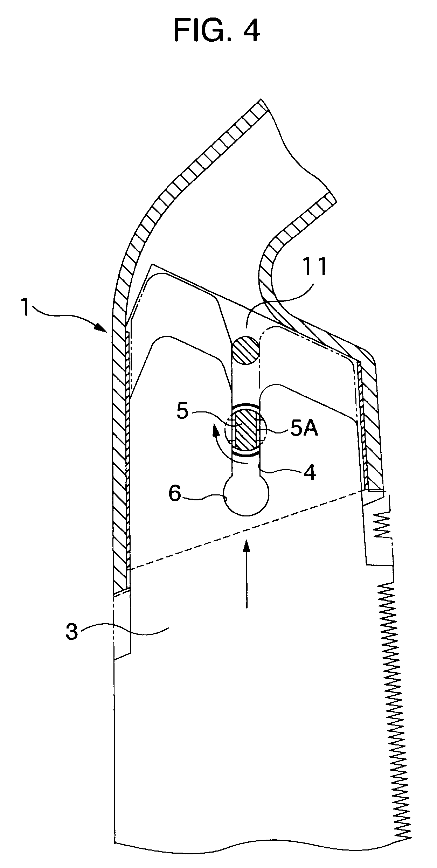

Fig. 4 is a horizontal cross-sectional view of the handsaw of Fig. 1, showing a half-inserted condition of a blade plate;

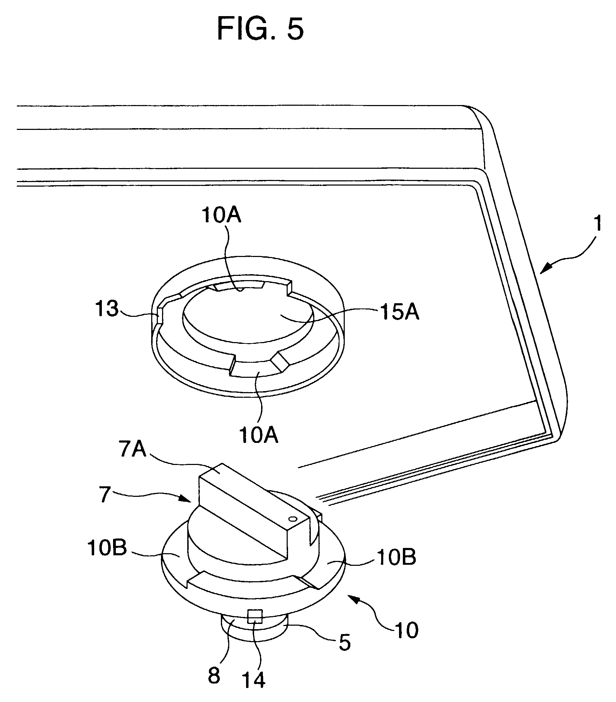

Fig. 5 is an exploded, perspective view of a portion of the handsaw of Fig. 1, showing an upper casing member of the handle and the retaining pin portion;
Fig. 6 is a vertical cross-sectional view of a blade retaining portion of the handsaw of Fig. 1 in a free condition;
Fig. 7 is a vertical cross-sectional view of the blade retaining portion of the handsaw of Fig. 1 in a locked condition; and
Fig. 8 is an enlarged, plan view showing a lock-free switching operation portion of the handsaw of Fig. 1.

### DESCRIPTION OF THE PREFERRED EMBODIMENT

A preferred embodiment of the present invention will now be described with reference to the drawings.

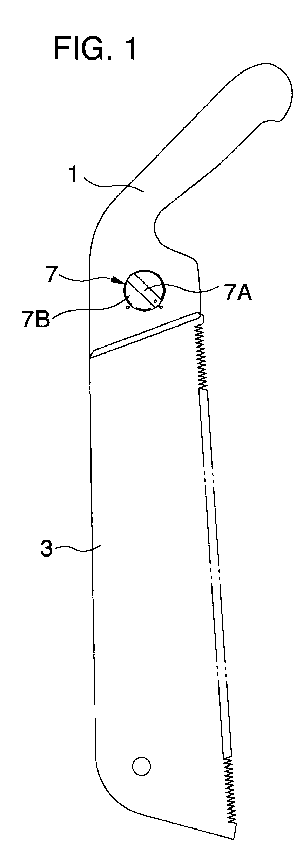

A handle 1 of a handsaw, shown in Fig. 1, comprises a pair of upper and lower casing members of a plastics material mated together. A pair of opposed guide plates 11 are mounted within the handle 1, and are spaced a predetermined distance from each other. These guide plates 11 define an insertion cavity or gap 2 therebetween which extends from a front end of the handle 1 toward the inside thereof, and the insertion cavity 2 has a width corresponding to a width of a blade plate 3. A proximal end portion of the blade plate (exchangeable blade) 3 is slidingly inserted into the insertion cavity 2, and is fixedly retained. A slit-like guide groove 4 is formed through the proximal end portion of the blade plate 3, and extends from the insertion-side end (proximal end) thereof toward a distal end thereof along the length of the blade plate 3. A retaining pin portion 5 is angularly movably mounted on the handle 1, and extends through the insertion cavity 2 in perpendicular relation to the opposite side surfaces of the handle 1. When the blade plate 3 is slidingly inserted into the handle 1, the retaining pin portion 5 is engaged in the guide groove 4. A retaining hole 6 of a circular shape is formed at an inner end of the guide groove 4, and this retaining hole 6 has a diameter larger than the width of the guide groove 4. The retaining pin portion 5 is formed into such a configuration that its outer diameter or width varies in the direction of the circumference thereof, that is, varies depending on the angular position thereof. Namely, the retaining pin portion 5 has a smaller-width portion capable of sliding along the guide groove 4, and a larger-width portion unable to slide along the guide groove 4. With this construction, when the retaining pin portion 5 is angularly moved or turned into a predetermined angular position (locked position), the retaining pin portion 5 is unable to slide along the guide groove 4. Therefore, the blade plate 3 is first inserted into the insertion cavity 2 until the retaining pin portion 5 reaches the retaining hole 6, and then the retaining pin portion 5 is angularly moved into the locked position, so that the retaining pin portion 5 is unable to slide along the guide groove 4, thereby fixing the blade plate 3 to the handle 1 against withdrawal.

More specifically, the retaining pin portion 5 is formed into a configuration substantially conforming to the shape of the retaining hole 6 formed in an enlarged manner at the inner end of the guide groove 4, and the cylindrical outer peripheral surface of the retaining pin portion 5 is notched to provide the smaller-width portion (smaller-diameter portion) 5A slightly smaller in width than the guide groove 4. More specifically, diametrically-opposite portions of the cylindrical outer peripheral surface of the retaining pin portion 5 are notched to form the smaller-width portion 5A having the width (between these opposite notched surfaces) smaller than the width of the guide groove 4. Therefore, the retaining pin portion 5 has such an outer diameter than it can be engaged in the retaining hole 6, and that it is unable to slide along the guide groove 4 unless it is angularly moved from the locked position into a free position. When the retaining pin portion 5 is angularly moved into the free position where the smaller-width portion 5A is aligned with the guide groove 4, the blade plate 3 can be withdrawn from the handle 1 since the smaller-diameter portion 5A is narrow.

A fix-free switching operation portion 7, operable to angularly move the retaining pin portion 5, is mounted on the handle 1. In this embodiment, the fix-free switching operation portion 7 comprises a resin disk 7B formed on the upper end of the retaining pin portion 5, and this resin disk 7B has a thumb piece portion 7A or a tool engagement groove which is exposed to the outer surface of the handle 1 through an exposure hole 15 formed through the upper casing member.

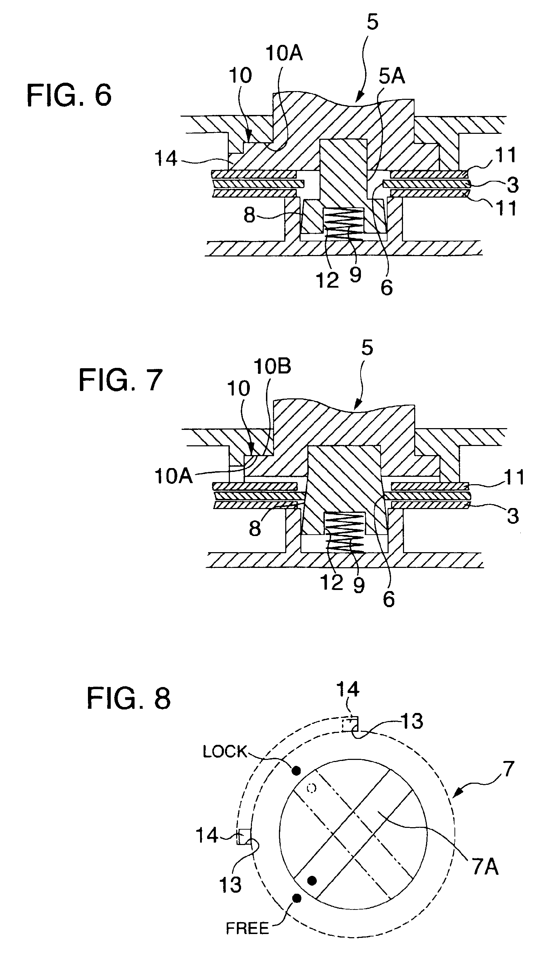

In this embodiment, the retaining pin portion 5 of a generally cylindrical shape is formed into a conical shape, flaring downward (if the direction of the thickness of the blade plate 3 is defined as the upward-downward direction), thereby forming a downwardly-flaring, tapering outer surface portion 8 over the entire circumference thereof, as shown in Fig. 7. A resilient member 9 urges the retaining pin portion 5 upwardly, so that the tapering outer surface portion 8 is resiliently held against an inner edge of the retaining hole 6.

More specifically, an engagement recess 12 is formed in a bottom surface of the retaining pin portion 5, and the resilient member 9 (in the form of a spring), normally urging the retaining pin portion 5 upwardly, is engaged or received in this engagement recess 12, and the tapering outer surface portion 8 of the retaining pin portion 5 is abutted against the inner edge of the retaining hole 6 under the influence of the resilient member 9. Namely, in the locked condition, the tapering outer surface portion 8 is held against the inner edge of the retaining hole 6 under the influence of the resilient member 9, and therefore the shaking of the blade plate 3 is prevented, so that a cutting operation can be carried out satisfactorily.

Therefore, there is provided the epoch-making blade plate attachment structure of extremely-excellent utility in which the lock-free switching operation can be carried out easily with the simple construction, and besides the shaking of the blade plate is prevented.

In this embodiment, there is provided an angular movement pressing portion 10 which automatically holds the tapering outer surface portion 8 out of engagement with the inner edge of the retaining hole 6 and the inner edges of the guide groove 4 when the retaining pin portion 5 is angularly moved into the free position where the smaller-width portion 5A is aligned with the guide groove 4, so as to exchange the blade plate 3.

More specifically, for example, concave portions are formed on an angular movement sliding-contact surface of the retaining pin portion 5 (the resin disk 7B) while convex portions are formed on an angular movement sliding-contact surface of the upper casing member of the handle 1, and these concave and convex portions jointly constitute the angular movement pressing portion 10. These concave and convex portions function as follows. In this embodiment, when the retaining pin portion 5 is angularly moved toward the free position, the upper surface of the retaining pin portion 5 is brought into contact with the convex portions 10A, formed on the handle 1, and therefore the retaining pin portion 5 is moved downward while compressing the resilient member 9, provided at the lower portion of the retaining pin portion 5, so that the tapering outer surface portion 8 is held out of engagement with the inner edge of the retaining hole 6. In contrast, when the retaining pin portion 5 is angularly moved into the locked position so as to lock the blade plate 3, the upper surface of the retaining pin portion 5 is brought out of contact with the convex portions 10A, and therefore the retaining pin portion 5 is moved upward under the influence of the resilient member 9, with the convex portions 10A received respectively in the concave portions 10B (formed on the retaining pin portion 5), so that the tapering outer surface portion 8 is resiliently held against the inner edge of the retaining hole 6.

Namely, when the fix-free switching operation portion 7 is operated to angularly move the retaining pin portion 5 into the free position, the retaining pin portion 5 is automatically pressed down or moved downward against the bias of the resilient member 9 through the angular movement pressing portion 10, so that the tapering outer surface portion 8 is held out of engagement with the inner edges, and the blade plate 3 can be smoothly withdrawn from the handle 1 in such a manner that the retaining pin portion 5 slides along the guide groove 4.

Abutment step portions 13 for limiting the angular movement of the retaining pin portion 5 are formed on the angular movement sliding-contact surface of the upper casing member of the handle 1 held in sliding contact with the retaining pin portion 5, and a stopper projection 14 for abutting engagement with the abutment step portions 13 is formed on the resin disk 7B formed on the retaining pin portion 5.

As described above, according to the first aspect of the present invention, there is provided the epoch-making blade plate attachment structure in which the blade plate can be easily exchanged with the simple operation for angularly moving the retaining pin portion from the locked position into the free position by the fix-free switching operation portion, and this structure is simple in construction, and is excellent in mass-productivity.

In the second and third aspects of the invention, there is achieved the blade plate attachment structure which has the simpler construction, and has excellent utility.

In the fourth aspect of the invention, in the locked condition, the tapering outer surface portion is held against the inner edge of the retaining hole under the influence of the resilient member, and therefore the shaking of the blade plate is prevented, and the cutting operation can be carried out satisfactorily.

Thus, there is provided the epoch-making blade plate attachment structure of extremely excellent utility in which the lock-free switching operation can be carried out easily with the simple construction, and besides the shaking of the blade plate is prevented.

In the fifth aspect of the invention, when the retaining pin portion is angularly moved into the free position, the retaining pin portion is automatically pressed or moved against the bias of the resilient member by the angular movement pressing portion, so that the tapering outer surface portion is held out of engagement with the inner edges of the retaining hole and guide groove, and the blade plate can be smoothly withdrawn from the handle in such a manner that the retaining pin portion slides along the guide groove. Therefore, there is provided the extremely-epoch-making blade plate attachment structure in which the shaking of the blade plate is prevented with the simple construction, and besides this shaking prevention effect is automatically canceled by switching the retaining mechanism into the free condition so that the blade plate can be smoothly inserted into and withdrawn from the handle.

The present invention is not limited to the above embodiment, and various modifications can be made without departing from the scope of the appended claims.

## Claims

1. A blade plate attachment structure wherein a blade plate is slidingly inserted into an insertion cavity, formed in a handle, and is retained and fixed to said handle;
wherein a guide groove is formed through said blade plate, and extends from an insertion-side end thereof, defining a proximal end, toward a distal end thereof;
wherein a retaining pin portion for engagement in said guide groove is mounted in said insertion cavity for angular movement between a free position and a locked position;
wherein a retaining hole, having a diameter larger than a width of said guide groove, is formed at an inner end of said guide groove;
wherein said retaining pin portion is formed into such a configuration that a width of said retaining pin portion varies depending on an angular position thereof, so that said retaining pin portion, when disposed in said free position, is able to slide along said guide groove whereas said retaining pin portion, when angularly moved into said locked position, is unable to slide along said guide groove;
wherein when said retaining pin portion is held in said free position, said blade plate is inserted into said insertion cavity until said retaining pin portion reaches said retaining hole, and then said retaining pin portion is angularly moved into said locked position, so that said retaining pin portion is unable to slide along said guide groove, thereby fixing said blade plate to said handle against withdrawal; and
wherein a fix-free switching operation portion, which is operable to angularly move said retaining pin portion between said free position and said locked position, is mounted on said handle.

2. A blade plate attachment structure according to claim 1, in which said retaining pin portion is formed into a configuration substantially conforming to the shape of said retaining hole formed in an enlarged manner at the inner end of said guide groove, and said retaining pin portion has a smaller-width portion slightly smaller in width than said guide groove, and when said retaining pin portion is angularly moved into said free position, said smaller-width portion is aligned with said guide groove so as to allow said retaining pin portion to be engaged in said retaining hole, and when said retaining pin portion is angularly moved into said free position, said blade plate can be withdrawn from said insertion cavity in said handle since the width of said smaller-width portion is smaller than the width of said guide groove.

3. A blade plate attachment structure according to claim 1 or claim 2, in which said fix-free switching operation portion is formed on an upper end of said retaining pin portion, and is exposed to an outer surface of said handle.

4. A blade plate attachment structure according to claim 1, claim 2 or claim 3, in which said retaining pin portion has a tapering outer surface portion which is formed on its outer peripheral surface, and is flaring in one of upper and lower directions corresponding to a direction of a thickness of said blade plate, and there is provided a resilient member which urges said retaining pin portion in the other of said upper and lower directions so that said tapering outer surface portion can be abutted against an inner edge of said retaining hole.

5. A blade plate attachment structure according to claim 4, in which there is provided angular movement pressing portion, and when said retaining pin portion is angularly moved into said free position where said retaining pin portion can slide along said guide groove, said angular movement pressing portion presses and moves said retaining pin portion against the bias of said resilient member, thereby holding said tapering outer surface portion out of engagement with the inner edge of said retaining hole and inner edges of said guide groove.
